# EUROPEAN PATENT APPLICATION

(11) **EP 2 955 507 A1**
(43) Date of publication of application: **16.12.2015**
(21) Application number: 14172107.6
(22) Date of filing: 12.06.2014
(51) Int. Cl.: G01N 21/65, G01N 21/64, G01N 21/55, B82Y 15/00

(54) **A substrate, an apparatus and a method of determining the presence of a molecule**

(71) Applicant: Danmarks Tekniske Universitet, 2800 Kgs. Lyngby (DK)
(72) Inventor: Mogensen, Klaus Bo, 2300 Copenhagen S (DK); Kutter, Jörg Peter, 2990 Nivå (DK)
(74) Representative: Inspicos P/S

(57) **Abstract**

A bendable rod (20) has on one side a bio recognition layer (70) to which a molecule (95) may attach, whereby the rod will bend. On an opposite side, the rod has a plurality of gold dots (80) and reporter molecules (90) provided between or on the dots. When the rod is bending, the distance between the dots will change, as will the surface enhanced Raman scattering or fluorescence of the reporter molecules, whereby the bending and thus the presence and/or concentration of the molecule is determined.

## Description

The present invention relates to a method of determining the presence or quantifying a concentration of a molecule, a substrate suitable for use in the determination, a method of manufacturing the substrate and an apparatus for determining the presence/concentration. In general, the determination is performed on the basis of an element configured to bend in the presence of the molecule and having a surface suitable for use in e.g. a SERS method.

Structures of sensing mechanisms may be seen in US2007/0086001, US6289717, WO 00/58729, WO 01/33226, US2012/105840, US2004/0058335, US7655269, US6778316, CN1796989, "A chemical sensor based on a microfabricated cantilever..." by Battiston et al, "Nanomechanical detection of cholera toxin using microcantilevers..." by Tark et al, "Photonic Crystal Based All-Optical Pressure Sensor", Lu et al., MEMS 2011, Cancun, Mexico, January 23-27, 2011, pp. 621-624, "Bioassay of prostate-specific antigen (PA) using microcantilevers" by Guanghua Wu et al, Nature Biotechology; Nature publishing, vol. 19, no. 9, 1 September 2001, pp 856-860, and "Femtomolar Sensitivity DNA Photonic Crystal Nanowire Array Ultrasonic Mass Sensor", Lu et al., MEMS 2012, Paris, France, 29 January-2 February, 2012, pp. 88-91.

In the traditional cantilever sensors, sensing relies on launching a focused light beam onto the sensor surface and receiving radiation reflected from the surface.

It has been found that scattering of light from plasmonic nanoparticles deposited on the sensor surface can be used for detection. This makes it possible to detect the bending of nanostructures even with a size that is comparable to or significantly smaller than the wavelength of light, which is impossible when simple reflection of light from the sensor surface is utilized as the sensing principle. The detection principle may rely on surface enhanced detection schemes, such as surface enhanced Raman scattering or surface enhanced fluorescence. In these detection schemes, the signal strength is highly dependent on the inter-particle distance of the plasmonic nanoparticles located on the nanotube sidewall. When the nanotube bends (due to binding with the target molecules), the inter-particle distance changes, resulting in a change in the optical signal intensity.

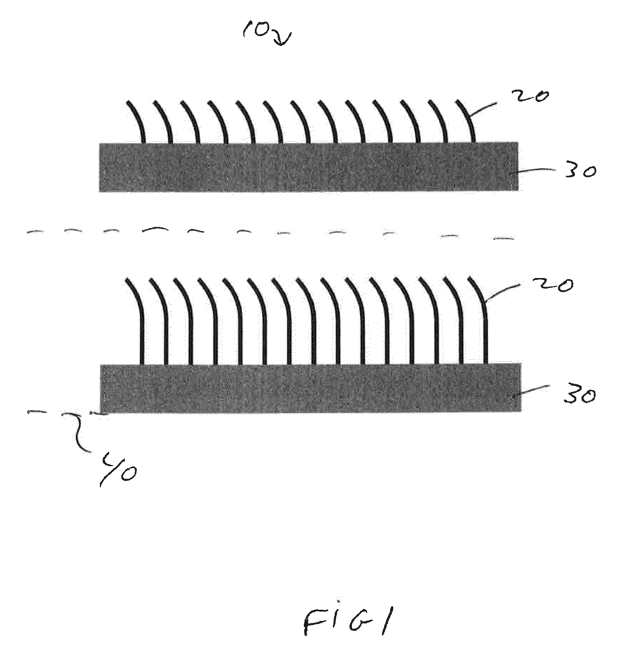

This type of sensor is an improvement over traditional mechanical sensors, such as cantilever sensors, because careful focusing and alignment of the light with the individual nanostructure is not necessary, when light scattering instead of reflection is used as the sensing principle. This makes the system much more robust and simple and furthermore makes it possible to detect or use nanostructures with dimensions comparable to or even smaller than the wavelength of the radiation used to detect the bending. The fabrication is furthermore significantly simplified, because under etching and release of cantilevers is not necessary, when the nanostructure(s) can be fabricated perpendicular to the substrate (Fig. 1) instead of in the plane of the substrate. The sensor can be used both in the gas phase and in the liquid phase.

A first aspect of the invention relates to a substrate comprising a base and at least one elongate sensing rod fixed to the base and extending away from the base, where the sensing rod has a longitudinal axis and a first surface, positioned on one side of a plane comprising the longitudinal axis, and a second surface positioned on an opposite side of the plane,
the first surface being configured to extend or contract upon the presence of a predetermined molecule,
the second surface comprising:
- a plurality of metallic elements positioned with a distance of no more than 100 nm and
- one or more reporter molecules positioned on or at the metallic elements, the reporter molecules being configured to emit/scatter radiation differently for different distances between the metallic elements.

In the present context, a substrate simply is an element which e.g. may be used in a determination of the presence of a molecule.

The base preferably is a solid or stiff element, the operation of which may be to act as a "handle" for the sensing rod(s) and a base for this/these to extend from. Preferably, the base is at least substantially stiff so as to not itself bend when exposed to the molecule. In this manner, a bending of the elongate rod(s) has no contribution from any bending of the base.

Preferably, the base has a plane surface from which the sensing rod(s) extend(s), such as perpendicularly.

Naturally, the substrate preferably is a monolithic element, but it may be divided into any number of elements each having one or more of the elongate rods, if more than one is present. Especially when taking into account the below-mentioned preferred number of and dimensions of the bendable rods, a monolithic substrate is preferred.

Preferably, the base is made of a material which is not influenced or altered by the presence of the molecule. Also, the elongate rod(s) may be made of a material of this type, such as if subsequently added a material or layer which is sensitive to the molecule.

The substrate may be manufactured in a number of steps generating both the base and the elongate rod(s), or the substrate may be manufactured by providing the base and the elongate rod(s) in different steps followed by a step of fixing the elongate rod(s) to the base. This attachment may be a gluing, soldering, of the like. In a further alternative, the elongate rod(s) may be grown on the base.

As mentioned above, the substrate may also be manufactured from a number of elements so that the base may be assembled from a number of base elements either each having one or more elongate rod(s), or the elongate rod(s)may be fixed thereto subsequently.

The plane of the base, which may be the surface seen when the elongate rod(s) is/are not present, preferably is a plane, upper surface, from which the elongate rod(s) extend(s). Naturally, other shapes may be used, such as bent or twisted planes/surfaces, if desired. In one example, the plane/surface may have parts which are plane but which are at an angle to each other, where the elongate rod(s) of the different parts have different properties, such as bending when exposed to different molecules, different quantities or the like of a molecule, or the like.

In this context, an elongate sensing rod preferably is an element which is configured to bend when the first surface expands/contracts.

In this context, an elongate rod preferably is an element which has a length (between two ends, one of which is attached to the base) is longer than a diameter across the length. Preferably, the length is at least 5 times, such as at least 10 times, preferably at least 20 times the largest diameter of the elongate rod.

The length of a rod may be selected in accordance with the manufacturing technique, the stiffness thereof, etc. Usually, a rod length is from 100 nm to 100 µm, such as between 10 nm and 10 µm, and the diameter from 10 nm to 1000 nm, such as 15-500 nm or 50-500 nm.

The sensing rod has a longitudinal axis. This axis extends within the elongate rod, such as through a centre thereof as determined in a cross section across the longitudinal axis. The sensing rod(s) may be straight or curved, whereby the plane also may be plane or curved.

A plane may easily be defined in which the longitudinal axis is present. An infinite number of such planes exist.

The fiction or function of the plane is to divide the outer surface of the sensing rod into two parts, one part having the first surface and the other part having the other surface. The first and second surfaces preferably are opposite. In this respect, opposite may mean that, along the length of the sensing rod, the first and second surfaces are present at least substantially on either side of a centre of the sensing rod in a cross section thereof.

In general, it is desired that the first and second surfaces are positioned opposite to each other so that when the first surface expands/contracts, the second surface will, as a result thereof, contract/expand, whereby a distance between metallic elements positioned, in relation to each other, along the longitudinal direction, will change.

The first and second surfaces may take up any percentage, less than 100% of the circumference of the sensing rod. Preferably, the first and second surfaces each takes up less than 75%, such as less than 60%, such as less than 50% of the circumference of the sensing rod.

On the other hand, preferably at least the first surface takes up at least 10%, such as at least 20%, such as at least 30%, such as at least 40% of the circumference of the sensing rod in order to obtain a surface sufficient to sense the presence of the molecule and thus bend sufficiently.

It is noted that the skilled person will know how to dimension an elongate rod in order for it to be bendable by the operation of e.g. one or two surfaces or layers sensitive to e.g. the presence of a molecule.

The first surface is configured to extend or contract upon the presence of the predetermined molecule. This may be obtained in a number of manners. Preferably, the first surface has a bio recognition layer.

Molecules that bind or adsorb to the surface or to recognition molecules/probes on the surface can result in a change in the surface stress, thereby causing a bend in the structure. A mechanism for a change in the surface stress can e.g. be a higher density of electrical charges on the surface after binding; e.g. negatively charged target DNA will repell each other when bond to the probe DNA on the surface. Hence the negative charge density is higher after binding than before, because the amount of DNA is higher. A similar mechanism apply for other molecules, such as proteins, peptides, glycans etc. Neutral molecules can also result in changes in the surface stress due to the binding forces of the molecules to the surface.

The first surface is configured to extend or contract, such as to a first degree, upon presence of the molecule. The second surface may be configured to extend/contract to a second degree, being different from the first degree upon presence of the molecule.

The first and second degrees may be quantified so that the presence of the molecule will make one of the first and second surfaces extend more than the other. When these surfaces are positioned on opposite sides of each elongate rod, the extending of one surface in relation to the opposite surface will make the elongate rod bend either toward the direction of the first surface or the direction of the second surface.

Naturally, one of the first and second degrees may be no or at least substantially no extending/contraction of the surface. In that situation, the bending will be caused by the surface having the higher degree of extending/contraction.

Of course, one surface may be expanding when exposed to the molecule and the other may be contracting. This will also cause the desired bending.

Preferably, the two different surfaces are generated by providing a cover or layer on at least one of the surfaces. This cover or layer may be either of the first and second surfaces. The cover or layer may be more or less expanding, than the other surface, when subject to the molecule.

The thickness of the layer can be from a single molecular layer (<1nm) to a multitude of molecular layer up to 100 nm. The layer can also be formed by biomolecules immobilized perpendicular to the surface, so the layer thickness is given by the length of the molecules, up to e.g. 100 nm. The sensing layer of the first surface can also be inorganic by having e.g. a different hydrophilicity or different wetting properties, resulting in different binding strengths to the target molecules.

The second surface comprises a plurality of metallic elements positioned with a distance of no more than 100 nm, such as no more than 50 nm, such as no more than 30nm, such as no more than 20nm.

Preferably, the metallic elements form convex parts between which concave parts exist. These concave parts may be made of any desired material, such as a base material of the rod, the metal or other materials. The second surface thus may be completely made of the metal or alloy, where the surface is uneven and has convex parts.

In this respect, the distance between the metallic elements may be determined as a distance between such elements when concave parts between such elements comprise a different material, so that the boundaries between the metallic elements and other parts is clear. Alternatively, the distance may be that between peaks or top portions of the concave parts of neighbouring metallic elements.

When the metallic elements form convex parts between which are concave parts of the same material, the distance may be that between peaks or top portions of the concave parts.

The plasmonic metal particles/elements usually are, but do not need to be, spherical, and can e.g. have a larger (corresponding) diameter than thickness, for example. The area, along the first surface, of a metallic element may be or correspond to a diameter 10nm - 1µm, for example.

In general, the molecule may be any type or group of molecules, such as water or particular DNA fragments or an antibody / antigen, such as enzyme, protein, aptamer, hapten, lectin or a selective polymer layer, such as a self assembled layer, molecular imprinted polymer layer, block copolymer, porous polymer layer or the like. Alternatively, the molecule may be a combination of these where e.g. the polymer layer is functionalized with the antibody / antigen.

The one or more reporter molecules are positioned on or at the metallic elements. These molecules may be fixed, such as by chemisorption to the metal by means of e.g. metal-ligand bonds, physisorption, such as with Van der Wals forces, or the like, in these positions.

A reporter molecule may be any type of molecule which is able to emit or scatter radiation, such as by Raman, surface enhanced Raman, absorbance, extinction, Rayleigh scattering or fluorescence.

Usually, a reporter molecule will emit more or less radiation depending on the distance between the metallic elements between which it is positioned on the metal nanoparticles or between the nanoparticles.

Reporter molecules are usually molecules with a large Raman or fluorescence signal, such as organic fluorophores or aromatic Raman active molecules. Reporter molecules may be chosen from, or be a mixture of, fluoresceins, rhodamines, coumarins and their derivatives. Furthermore, relevant reporter molecules may be found from fluorescent proteins, such as green, red and yellow fluorescent proteins and their derivatives. Molecules with strong Raman active vibrations, such as Rhodamines, molecules containing aromatic rings, molecules containing carbon-carbon triple bonds and molecules with carbon-nitrogen triple bonds. Furthermore, molecules with carbon-halide bonds, such as C-Cl, may be used as reporter molecules.

In a preferred embodiment, the step of providing the molecule in the presence of the elongate sensing rod(s) comprises also providing the reporter molecule(s) in the presence of the second side(s). Naturally, the molecule may be provided in the presence of the rod(s) prior to or after the reporter molecule if desired. Especially in the situation where the molecule attaches to the first surface or where the reporter molecule attaches to the second surface, the order of presenting the molecule and the reporter molecule may be selected by the skilled person.

An especially interesting embodiment is one where the reporter molecule is of a type which will experience a large increase in the output of radiation therefrom or thereby when positioned between two metallic convex elements.

In one situation, the reporter molecule may be a SERS active molecule. This scattering, in SERS, will depend heavily on the distance between the metallic elements, whereby this distance, and thus the bending of the rod and thus the amount of molecule affecting the first surface, may be quantified from the amount of radiation scattered.

SERS active molecules are molecules as those described above.

An alternative embodiment is one where plasmon enhanced fluorescence is used for detection. This detection scheme is analogous to surface enhanced Raman detection, in the sense that the signal strength is highly dependent on the distances between the plasmonic nanoparticles. Hence, the reporter molecule is a fluorophore, where the change in fluorescence is detected as a result of the change in the inter-particle distance.

Other types of detection may be the detection of absorbance, extinction, and/or Rayleigh scattering.

The inter-particle distance necessary to enable a detectable signal can be in the range 0.1 nm to 100 nm and the change in inter-particle distance resulting in a signal can be less than 1 nm, which is well known for surface-enhanced Raman spectroscopy (SERS).

In one embodiment, the substrate comprises a plurality of elongate sensing rods. This has a number of advantages both from a statistical point of view where multiple sensing rods are then able to provide a better overall determination or sensing of the presence of the molecule.

In addition, when multiple rods are present, a sensing set-up need not focus on a single, particular rod but may be more robust and either concern itself with the bending of multiple rods or perform a determination on the basis of multiple of the rods.

In this situation, 100 or more rods, such as 500 or more rods, preferably 1000 or more rods may be present.

In this situation, different embodiments may be derived. In one situation, the first surfaces of individual, non-overlapping groups of the rods may comprise first surfaces configured to expand/contract in the presence of different molecules or types of molecules, so that the substrate may be used to determine, simultaneously, the presence of multiple molecules or types of molecules.

The plurality of rods may be positioned, where contacting or fixed to the base, in an ordered manner, such as in a 2D array, or stochastically.

In a preferred embodiment, the planes of the elongate sensing rods are at least substantially parallel and the first sides are positioned in a predetermined direction. Thus, the first surfaces are positioned in the same direction, so that the rods will all bend in the same direction. This direction usually is not in the plane.

In this manner, the second surfaces of all rods are directed in the opposite direction, so that a detection of a contraction/extending of that surface along the longitudinal direction of the rods, will cause a difference in distance between the metallic elements in that direction. As will be mentioned below, such detection may be made using the elements in e.g. a SERS determination.

When all rods or large groups thereof have the first surfaces in the same direction, these rods will bend to the same side upon presence of the molecule, whereby a detection set-up may detect the bending over a larger surface over which the rods are positioned. A less critical positioning of the substrate in relation to the detection elements is thus obtained.

Another advantage is that when all rods bend in the same direction, negative interaction, such as physical contact, between the rods is avoided. On the other hand, a more stochastic direction of the first surfaces or the providing of groups of rods having first sides pointing in different directions will make the angular criticality between the substrate and a detector set-up even less critical.

In one embodiment, the rods are divided into separate groups which individually have first surfaces configured to expand/contract upon presence of a different molecule or type of molecule and the second surfaces of which are directed in different directions. Thus, a detector set-up may be directed toward second surfaces of the rods of a particular group of rods with first surfaces sensitive to a particular type of molecule, where the second surfaces of other groups may not be visible, so that interference from other rods, having first surfaces sensitive to other molecules or groups of molecules and which may interfere, is avoided or reduced.

In a similar manner, different rods or groups of rods may have different distances between the metallic elements, so that contraction/extension of first sides of the rods of these groups may be distinguished from each other. In addition, or alternatively, different rods or groups of rods can have different metals/biorecognition layer combinations for multiplexing in order to simultaneously detect several analytes in parallel.

In one embodiment, the first surface comprises a bio recognition layer, which preferably is a layer or surface extending/contracting upon contact with the molecule. A large number of different layers and surfaces are known which have this property.

Typical bio recognition layers comprise one or more substances, such as antibodies, which engage with the molecules and cause the layer/surface to expand/extend. Contracting layers or surfaces will function equally well.

Bio recognition layers may be antibodies or antigens, such as enzymes, proteins, aptamers, haptens, lectins or a selective polymer layer, such as a self assembled layer, molecular imprinted polymer layer, block copolymer layer, porous polymer layer or the like. Alternatively, the condition may be the presence of a combination of these where e.g. the polymer layer is functionalized with the antibody / antigen.

In a preferred embodiment, the metallic elements are elements of gold, silver, copper, aluminium, platinum, and/or combinations thereof.

In a preferred embodiment, different concentrations of the molecule in the vicinity of the first surface of a rod will make the first surface extend/contract to different degrees, at least within a predetermined concentration interval. Thus, the presence of the molecule will be detectable as a bending of the rod, but a concentration of the molecule may be detectable from the degree of bending of the rod.

A second aspect of the invention relates to a system comprising a substrate according to the first aspect and a sensing apparatus comprising a radiation emitter configured to direct radiation toward the second side(s) of the sensing rod(s) and a radiation receiver configured to receive radiation from the second side(s) of the sensing rod(s) as well as a processor configured to quantify received radiation and estimate a presence of the molecule.

In this context, the radiation emitter may be a laser or other type of radiation emitter emitting a single wavelength or radiation within a wavelength interval. The radiation emitter may be configured to output a controlled or controllable wavelength or radiation within a controlled or controllable wavelength interval. In addition, an intensity of the radiation emitted may be controlled or controllable.

The radiation emitter may itself generate the radiation or it may receive the radiation from another source and direct this radiation toward the substrate.

The radiation emitter may comprise reflectors, mirrors, prisms, optical fibres or other optical elements for directing the radiation toward the substrate.

The radiation receiver may be based on any desired technology, such as an avalanche diode, photomultiplier tube, or silicon diode.

The radiation receiver may further comprise elements, such as radiation filters, etalons, prisms or the like, configured to transmit only a single wavelength or a predetermined wavelength interval or polarization.

Usually, the radiation receiver may output an electrical signal, such as a voltage or a current, correlated to an intensity of radiation received. This signal may be pre-processed, such as amplified, converted, such as analogue-digital converted, filtered or the like before feeding to the processor.

The system may be divided up into separate parts, which do not engage, if desired, as the detection technique may be optical and thus a non-contact technique.

The processor may be any type of element configured to perform the determination from the quantified radiation, such as a computer, DSP, ASIC, FPGA or the like, software controlled or hardwired, and/or a combination thereof. This processor or the like may be positioned close to a remainder of the system or remotely therefrom, such as accessible via a network, such as the internet, if desired.

In this situation, the radiation emitter may be configured to emit radiation toward all rods of the substrate or a sub-group thereof, and the radiation receiver may be configured to receive radiation from all rods of the substrate or the subgroup thereof. Naturally, an overlap preferably is present between the area of the substrate, or the rods thereof, to which radiation is emitted and from which radiation may be received.

The radiation emitter and receiver may have different optical paths and thereby use different optics for transmitting the signal/radiation or may use overlapping optical paths, such as in a confocal microscope configuration, where the same microscope objective is used for both excitation of the sample and for collection of the resulting signal.

As indicated above, the processor may, from the bending, determine not only the presence of the molecule but also a concentration of the molecule, when the bending depends on the concentration of the molecule.

In surface enhanced Raman scattering or fluorescence, radiation with wavelengths in the interval of 200 nm to 1.5 µm are usual.

In one embodiment, the apparatus further comprises an element configured to supply a sample to the substrate. This sample may comprise the molecule. Thus, the determination may be a determination of whether the molecule is present or is present in a concentration exceeding a threshold concentration. Also, the determination may be a determination of a concentration of the molecule in the sample.

This sample may be a liquid or a gas, and the radiation emitter and receiver may be configured to launch the radiation toward and receive radiation from the substrate while submerged in the sample, or the substrate may be withdrawn from the sample, such as dried, before being introduced into the apparatus.

The supply element may comprise a pump for supplying the sample to the substrate and/or to the detection set-up and/or to a container for holding the substrate and liquid in order to provide the liquid and any molecules therein on the rod(s). The substrate may be in the container and/or sample also during the irradiation/illumination thereof and the reception of the radiation by the radiation receiver.

A third aspect of the invention relates to a method of manufacturing a substrate according to the first aspect of the invention, the method comprising:
- providing a base and one or more elongate sensing rods fixed to the base, the rod(s) having, on a first side, the surface being configured to expand or contract upon presence of a predetermined molecule,
- providing a plurality of metallic elements on an opposite side of the elongate sensing rod(s) and
- providing the reporter molecules on or at the metallic elements.

Naturally, all comments made in relation to the above two aspects of the invention are equally relevant to this aspect of the invention.

As mentioned above, the base and rod(s) may be provided separately and subsequently be fixed to each other or may be provided as a single element.

In one embodiment, the step of providing the base and rod(s) may comprise providing, on the first surface, a coating configured to expand/contract in the presence of the molecule.

In one embodiment, the step of providing the coating comprises providing the coating from a first direction in relation to the base. In this manner, all rods, if multiple rods are present, are coated on the same side or from the same side so that all rods, when in the presence of the molecule, will bend to the same side or in the same direction.

The biorecognition molecules can be attached to the first side by binding to functional groups on the rod surface, such as carboxylic acids, amines, silanes or by using pi-stacking interactions.

Photopolymerization may be used, where oblique light is utilized: Light from a glanching angle is shone onto one side of the structures, so that the molecules are photopolymerized selectively on one side of the structures.

In one embodiment, the step of providing the metallic elements comprises depositing the metal from a second direction, opposite to the first direction, in relation to the base. Thus, the metallic elements on the rods, if multiple rods are present, also are provided from the same direction, so that any radiation scattered at these elements may be detected from the same direction from all rods.

The metallic coating can be obtained by means of deposition from an angle, such as glancing angle deposition (GLAD) or electrodeposition by having an electrical field perpendicular to the structures during deposition and/or photodeposition by launching light onto one side of the structures.

The attachment of the reporter molecule(s) is described above.

A fourth aspect of the invention relates to a method of determining the presence of a predetermined molecule, the method comprising:
- providing the molecule in the presence of one or more elongate sensing rods each having:
   - on a first side a first surface being configured to extend or contract upon presence of the molecule and
   - on a second side a second surface comprising a plurality of metallic elements positioned with a distance of no more than 100 nm and one or more reporter molecules positioned on or at the metallic elements, the reporter molecules being configured to emit/scatter radiation differently for different distances between the metallic elements,
- providing radiation toward the reporter molecule(s),
- quantifying radiation received from the reporter molecule(s) and determining the presence from the quantity of received radiation.

Naturally, the sensing rod(s) may be provided and manufactured as described further above.

The providing of the molecule in the presence of the rod(s) may be obtained by providing the rod(s) in a gas or liquid sample possibly comprising the molecule. This may be in a flow cell or in a steady state where the rod(s) is/are provided in the liquid/gas. The steps of providing the radiation and quantifying the radiation may be performed while the rod(s) is/are in the sample if desired. Alternatively, the rod(s) may be provided in the sample, where molecules may attach to or otherwise affect the first surface, where after the providing/quantifying steps may be performed on the thus affected rod(s).

The step of providing the radiation may be generation of the radiation or receipt of the radiation and the guiding of the radiation toward the rod(s). The radiation may be filtered or otherwise adapted between generation and impact on the rod(s).

Similarly, the radiation received from the rod(s) may be adapted, such as filtered and/or amplified, before being quantified.

The quantification usually is performed by a detector outputting a signal, such as a voltage and/or a current, corresponding to the intensity of the radiation received. This voltage/current/signal thus is a quantification of radiation received. This signal/voltage/current may subsequently be adapted, such as filtered/amplified/converted before being fed to other components, such as a processor, configured to derive from the voltage/current/quantified radiation a value or other information indicating whether the molecule is present or not and optionally a concentration in which the molecule is present.

Usually, the molecule will be determined as being present if present in a concentration exceeding a threshold concentration. Below the threshold concentration, the molecule may be assumed to not be present.

The threshold concentration may be determined in a number of manners, such as depending on a noise level and the like.

Then, the quantification step may not merely determine whether the molecule is present or not but may actually, from the quantified radiation, determine a concentration in which the molecule is present. Again, the quantified radiation may be correlated to a concentration of the molecule in any desired manner. In one situation, the correlation is a linear correlation. In other situations, a curve may be used that goes towards a maximum value when the target concentration is increased, such as a Langmuir adsorption curve.

In one embodiment, the step of providing the radiation comprises providing radiation within a predetermined first wavelength interval and the step of quantifying radiation comprises quantifying radiation within a predetermined second wavelength interval.

In a preferred embodiment, the step of providing the molecule in the presence of the elongate sensing rod(s) comprises also providing the reporter molecule in the presence of the second side(s), and wherein the quantifying step comprises quantifying radiation scattered by the reporter molecule. Naturally, the molecule may be provided in the presence of the rod(s) prior to or after the reporter molecule if desired. Especially in the situation where the molecule attaches to the first surface or where the reporter molecule attaches to the second surface, the order of presenting the molecule and the reporter molecule may be selected by the skilled person.

The distance determination and thus the bending determination and thus the determination of whether the molecule is present or not and/or a concentration in which the molecule is present, may be based on a direct determination of the received radiation from the reporter molecules. In one embodiment, a relative measurement is performed, where this radiation is determined both before and after exposure of the first surfaces to the molecule to have a determination of the received radiation also before the bending. Alternatively, radiation received and compared from two different groups of rods, where one set of rods have been exposed to the molecule and the other not.

As mentioned above, the step of providing the molecule in the presence of the rod(s) may comprise providing a sample in the presence of the rod(s) and wherein the determining step comprises determining a presence of the molecule in the sample.

In one embodiment, a simple set-up may be obtained when the sample comprises the second molecule. In that situation, the sample is merely presented to the rod(s), such as when the rod is immersed in the sample (liquid or gas), or the sample is provided over the rod(s), whereby this single step both provides the bending- if any - of the rod(s) as well as prepares the rod(s) for a SERS measurement by providing the second molecules in the desired positions between the metallic elements.

As mentioned above, the quantification step may be performed while the rod(s) is/are exposed to the sample, as the reporter molecule will scatter the light, in the case of surface enhanced Raman scattering (SERS), or result in a change in fluorescence, in the case of plasmon enhanced fluorescence. The target molecules on the first side of the rod, will not interfere directly with the signal, because they are not in close vicinity of the reporter molecules. Hence, they will only indirectly result in a signal, in the sense that they result in a bend of the rod, which changes the signal or the reporter molecules on the second side of the rod.

In the following, preferred embodiments of the invention will be described with reference to the drawing, wherein:
- Figure 1 illustrates nanostructures on a substrate seen from the side,
- Figure 2 illustrates a manner of manufacturing a substrate according to figure 1,
- Figure 3 is a scanning electron microscope pictures of vertically grown carbon nanotubes with gold deposited on the sidewall (on the right side of the nanotubes),
- Figure 4 schematically illustrates a bending nanotube with plasmonic metallic nanoparticles deposited on one side and biorecognition molecules on the other side. The detection principle is indicated by the arrows. The bending results in a change in the nanoparticle spacing, which changes the optical intensity of the signal, and
- Figure 5 illustrates a measurement set-up.

The preferred embodiment of the invention relates to a nano mechanical biochemical sensor substrate 10 based on an array of vertically aligned nanostructures or rods 20. An array of vertically aligned nanostructures is fabricated on a base 30 or inside a microfluidic channel network 40 perpendicular to the plane of the substrate. The array can either be organized uniformly or randomly. The sensing principle relies on measurement of the bending of the nanostructures, when target analytes are adsorbed selectively onto one side of the nanostructure surface. Selectively in terms of adsorption is achieved by fabricating a recognition layer on one side of the vertical nanostructures.

### Example of an implementation of the invention

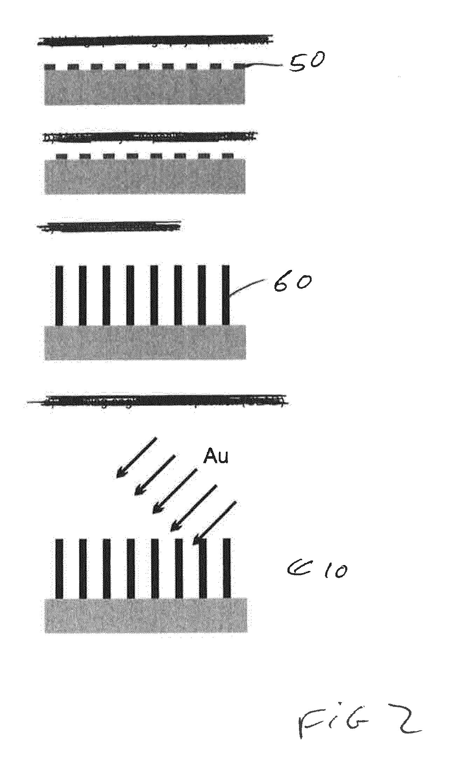

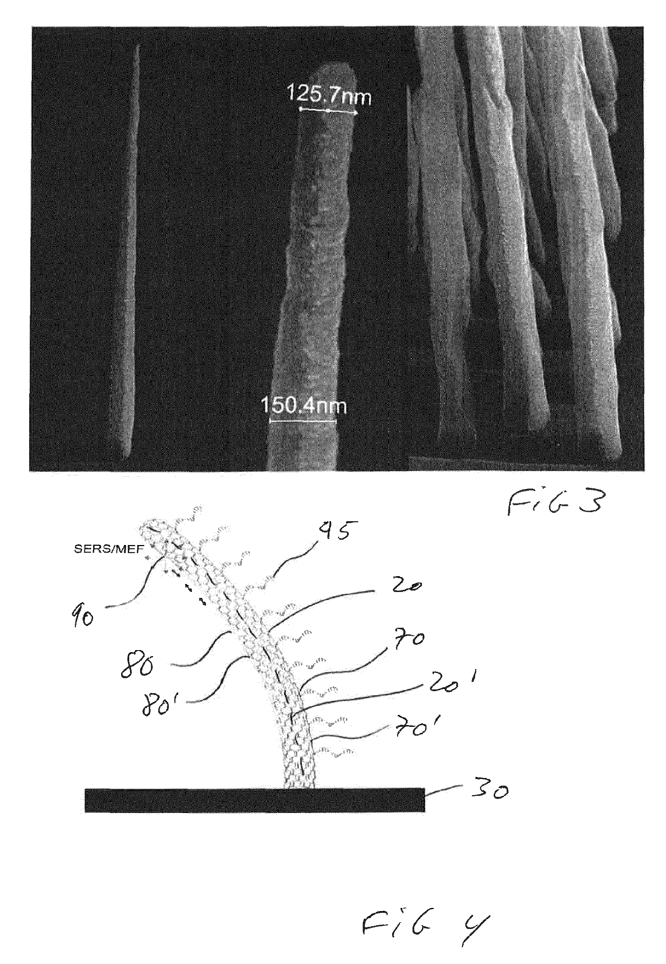

In fig. 2, the fabrication of a device is seen. An array of Ni nanodots 50 is fabricated by means of holographic photolithography and metal lift off (step a+b). Carbon nanotubes 60 are grown (step c) and gold nanoparticles 80 are deposited on the sidewall of the carbon nanotube 60 array by means of glancing angle deposition (step d). Fig. 3 shows an example of such structures.

The gold dots 80 are subsequently selectively functionalized with Surface Enhanced Raman (SERS) reporter molecules 90 on the gold nanoparticles 80. The signal from these reporter molecules is used for readout. The biorecognition molecules 70 are provided on the opposite sidewall 70' and cause a bending of the nanotube, when binding with the target analytes 95.

The sensing principle is depicted in Fig 4, where the rod 20 has a longitudinal axis 20' through which a plane is defined (perpendicular to the plane of the drawing) on one side (the right side) of which is a surface 70' having the bio recognition molecules 70 and on the other side (the left side) a surface 80' having the gold dots 80.

Binding between the recognition molecules and the target analytes (right side of the nanostructure) results in a change in the surface stress and hence bending of the nanotube. This changes the dot distance (plasmonic inter-particle distance) on the opposite side 80' of the nanostructure (left side), resulting in a difference in the surface-enhanced Raman signal of the reporter molecules 90.

### Detailed description of each part of the preferred embodiment.

### Nanostructures and their fabrication

The vertically aligned nanostructures can either be arranged in a uniform manner, such as an array or organized randomly. Both individual structures and the collective signal from an ensemble of structures can be used for detection.

The nanostructures can be fabricated by bottom up fabrication methods, such as catalytic growth of carbon nanotubes, silicon nanowires, zink oxide nanowires or polymeric nanowires etc.

The nanostructures can also be fabrication by top-down methods, such as etching of silicon nanowires or nanoimprinting / molding of the structures.

When a mask is used either for pattern definition of catalyst particles or an etching mask, processes such as: holographic lithography, deep UV lithography, step-and-flash lithography, e-beam lithography or nanoimprint lithography can be used.

### Obtaining different selectivity on the sidewalls of the nanostructures

Selective sidewall functionalization can be obtained by several methods
- Glancing angle deposition (GLAD) of metal, semiconductor or polymer layers, as depicted in fig 2d. This layer can serve as a template for further binding of reporter/recognition molecules.
- Photopolymerization using oblique light. Light from a glancing angle is shone onto the array and the biomolecules are photopolymerized selectively on one side of the nanostructures
- Transverse electrical field through the nanostructures. A transverse electric field is applied across the nanostructure array, which polarizes the nanostructures, thereby making one sidewall partially positive and the other partially negative. This is used for selective binding of recognition molecules on one sidewall.
- Binding to functional groups on the sidewall, such as amines, carboxylic acids, silanes or pi-stacking interactions

### Types of recognition elements/molecules on the sensor array

Various types of metals can be used, such as, Ti, Au, Ag, Al, Ni, Fe, Cu, Pt etc. The metal layer can be functionalized by e.g. antibodies, aptamers, haptens, lectins, enzymes or other recognition elements for selective measurements of the target analytes.

The sensor can also be used as a universal sensor by e.g. having two different metals on the first and second surface. This e.g. be done by depositing Al on the first side and gold on the second side followed by a brief oxidation. This will only oxidize Al (to Al oxide), which is hydrophilic, while leaving the gold in its metallic state for binding to the reporter molecules. Such as sensor can be used in e.g. a separation system (capillary electrophoresis, liquid chromatography, HPLC or gas chromatography) for label-free detection of all the analyte bands that pass through the detector.

Therefore the detector can be used both in situations where the analytes bind permanently to the sensors (e.g. in a biosensor) or where they bind momentarily (e.g. in a separation system).

### Detection principles

A simple example of a detection scheme is seen in Fig 4. The detection scheme relies on measurement of the optical signal from reporter molecules, where the signal strength relies on the distance between adjacent plasmonic particles. Such detection schemes could be:
- Surface enhanced Raman spectroscopy (SERS).
- Metal-enhanced fluorescence (MEF), surface enhanced fluorescence (SEF) or plasmon enhanced fluorescence (PEM)

For surface enhanced Raman spectroscopy it is well-known that a change as small as 1nm between the metal island can result in a 1 order of magnitude change in the signal strength.

The reporter molecules can either be permanently bonded to the plasmonic nanoparticles, through e.g. covalent bonds, such as a thiol linkage or be freely diffusing in close vicinity of the nanoparticles. In the last situation they could simply be added to the liquid buffer solution. They could furthermore be the solvent molecules, such as methanol, ethanol, acetonitrile or acetone.

The detection can be performed by resolving the whole optical spectrum, e.g. in the range 200 nm to 2000 nm by a spectrum analyzer. The detection can furthermore be performed by measurement of the total intensity of a part of the spectrum, using a photodetector, such as a semiconductor diode or a photomultipler tube.

### Implementation of the biosensor

- The sensor can be used both for gases and liquids
- The sensor can be used as a stand-alone sensor or integrated in a fluidic system, such as a flow injection system (FIA) or separation system, based on gas chromatography, liquid chromatography (HPLC), capillary electrophoresis or capillary electrochromatography. These systems can either be microfabricated or based on capillaries.
- A single sensor can be used or an array of sensors can be used for detection of multiple analytes.

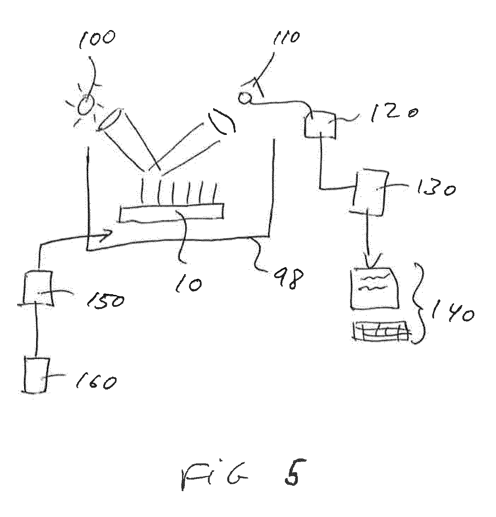

Figure 5 illustrates a measurement set-up where the substrate 10 is provided in a container or flow path 98 wherein the rods may be exposed to the sample under investigation.

Radiation is provided toward the substrate 10 from a radiation emitter 100, and radiation from the substrate is received by a radiation receiver 110 outputting a signal which may be pre-processed (amplified, filtered, converted or the like) in a pre-processing circuit 120 which feeds a signal (or the signal from the detector is fed) to a processor receiving the signal and determining therefrom whether the molecule was present, and optionally in which concentration, in the sample. This result may be fed to a computer 140 for an operator if desired.

The sample may be fed to the container 98 by a pump 150 withdrawing the sample from a sample store or receiving unit (receiving the sample from e.g. a portable container) 160.

Clearly, the sample may or may not be present in the container 98 during measurement, and the sample may be gas or liquid. The container 98 may be closed in order to prevent the sample from escaping.

Reporter molecules may be present in the sample if desired or may be provided to the substrate 10 prior to or subsequent to the exposing of the substrate to the sample.

## Claims

1. A substrate comprising a base and at least one elongate sensing rod fixed to the base and extending away from the base, where the sensing rod has a longitudinal axis and a first surface, positioned on one side of a plane comprising the longitudinal axis, and a second surface positioned on an opposite side of the plane,
the first surface being configured to extend or contract upon the presence of a predetermined molecule,
the second surface comprising:
- a plurality of metallic elements positioned with a distance of no more than 100 nm and
- one or more reporter molecules positioned on or at the metallic elements, the reporter molecules being configured to emit/scatter radiation differently for different distances between the metallic elements.

2. A substrate according to claim 1, wherein the substrate comprises a plurality of elongate sensing rods.

3. A substrate according to claim 2, wherein the planes of the elongate sensing rods are at least substantially parallel and wherein the first sides are positioned in a predetermined direction.

4. A substrate according to any of the preceding claims, wherein the first surface comprises a bio recognition layer.

5. A system comprising a substrate according to any of the preceding claims and a sensing apparatus comprising a radiation emitter configured to direct radiation toward the second side(s) of the sensing rod(s) and a radiation receiver configured to receive radiation from the second side(s) of the sensing rod(s) as well as a processor configured to quantify received radiation and estimate a presence of the molecule.

6. A method of manufacturing a substrate according to claim 1, the method comprising
- providing a base and one or more elongate sensing rods fixed to the base, the rod(s) having, on a first side, the surface being configured to expand or contract upon presence of the predetermined molecule,
- providing a plurality of metallic elements on an opposite side of the elongate sensing rod(s), and
- providing the reporter molecules on or at the metallic elements.

7. A method according to claim 6, wherein the step of providing the base and rod(s) comprises providing, on the first surface, a coating configured to expand or contract in the presence of the molecule.

8. A method according claim 7, wherein the coating step comprises providing the coating from a first direction in relation to the base.

9. A method according to claim 8, wherein the step of providing the metallic elements comprises depositing the metal from a second direction, opposite to the first direction, in relation to the base.

10. A method of determining the presence of a predetermined molecule, the method comprising:
- providing the molecule in the presence of one or more elongate sensing rods each having:
- on a first side a first surface being configured to extend or contract upon presence of the molecule and
- on a second side a second surface comprising a plurality of metallic elements positioned with a distance of no more than 100 nm and one or more reporter molecules positioned on or at the metallic elements, the reporter molecules being configured to emit/scatter radiation differently for different distances between the metallic elements,
- providing radiation toward the reporter molecule(s),
- quantifying radiation received from the reporter molecule(s) and determining the presence from the quantity of received radiation.

11. A method according to claim 10, wherein the step of providing the radiation comprises providing radiation within a predetermined first wavelength interval and wherein the step of quantifying radiation comprises quantifying radiation within a predetermined second wavelength interval.

12. A method according to claim 10 or 11, wherein the step of providing the molecule in the presence of the elongate sensing rod(s) comprises also providing the reporter molecule(s)in the presence of the second side(s), and wherein the quantifying step comprises quantifying radiation scattered or emitted by the second molecule.

13. A method according to any of claims 9-12, wherein the step of providing the molecule in the presence of the rod(s) comprises providing a sample in the presence of the rod(s) and wherein the determining step comprises determining a presence of the molecule in the sample.

14. A method according to claim 12 and 13, wherein the sample comprises the reporter molecule(s).
